# EUROPÄISCHE PATENTSCHRIFT

(11) **EP 1 646 690 B1**
(45) Veröffentlichungstag und Bekanntmachung des Hinweises auf die Patenterteilung: **29.12.2010**
(21) Anmeldenummer: 04740843.0
(22) Anmeldetag: 09.07.2004
(51) Int. Cl.: C08L 77/00, C08K 5/00, C08K 5/3492

(54) **GEHÄUSESCHALE FÜR EIN ELEKTRONISCHES GERÄT**
HOUSING SHELL FOR AN ELECTRONIC DEVICE
COQUE-BOITIER D'UN APPAREIL ELECTRONIQUE

(30) Priorität: 09.07.2003 DE 10331169
(43) Veröffentlichungstag der Anmeldung: 19.04.2006
(73) Patentinhaber: BASF SE, 67056 Ludwigshafen (DE)
(72) Erfinder: HESSE, Günter, 67229 Gerolsheim (DE); NEUHAUS, Ralf, 69124 Heidelberg (DE); REINFRANK, Karl-Michael, 67480 Edenkoben (DE); KROISS, Robert, 64646 Heppenheim (DE); SCHOBEL, Gunter, 64579 Gernsheim (DE); GUTTING, Wolfgang, 67483 Grossfischlingen (DE); USKE, Klaus, 67098 Bad Dürkheim (DE); SZENDRO, Mark, Delegacion A. Obregon, 01820 Mexico D.F. (MX)
(86) Internationale Anmeldenummer: PCT/EP2004/007559
(87) Internationale Veröffentlichungsnummer: WO 2005/005543

(56) Entgegenhaltungen:
- EP-A- 0 616 008
- EP-A- 0 927 742
- EP-A2- 0 469 930
- WO-A-02/28953
- DE-A1- 19 944 352
- GB-A- 2 097 008
- US-A- 4 001 177
- US-A- 5 256 718
- US-A1- 2001 008 913

## Beschreibung

Die vorliegende Erfindung betrifft eine Gehäuseschale für ein elektronisches Gerät aus einem temperaturbeständigen, halogenfrei flammfesten, thermoplastischen Kunststoff und dessen Verwendung zur Herstellung solcher Gehäuseschalen durch Spritzguss.

Großflächige Gehäuseschalen für elektronische Geräte werden heutzutage im Allgemeinen aus thermoplastischen Kunststoffen hergestellt. Dabei ist insbesondere bei solchen elektronischen Geräten, die einen Bildschirm enthalten, zum Beispiel Fernseher, Videomonitore oder Computermonitore, zu berücksichtigen, dass von den elektronischen Bauteilen große Wärmemengen abgegeben werden, und sich das Gehäuse deshalb stark aufheizen kann.

Um im Falle einer Fehlfunktion des Gerätes oder einer Hitzeeinwirkung von außen, zum Beispiel durch eine brennende Kerze, eine Brandentstehung zu verhindern oder die Brandausbreitung zu verzögern, werden den thermoplastischen Kunststoffen aus Gründen der Produktsicherheit in manchen Fällen Flammschutzmittel zugesetzt. Viele dieser Flammschutzmittel sind jedoch halogenhaltig und bergen damit selbst ein zusätzliches Gefahrenpotential, da toxikologische Bedenken gegen den Einsatz dieser Chemikalien bestehen. Aus diesem Grund werden seit einiger Zeit auch halogenfrei flammfeste Thermoplaste eingesetzt, zum Beispiel Polyblends aus Polyphenylenether und schlagfestem Polystyrol (PPE/HIPS) oder Polycarbonat/Acrylnitril-Butadien-Styrol (PC/ABS).

Diese Materialien weisen jedoch eine Reihe von Nachteilen bei der Herstellung der Gehäuseschalen und bei der Anwendung der fertigen Geräte auf. So sind zum einen bei der Herstellung der Gehäuseschalen durch Spritzguss relativ lange Zykluszeiten erforderlich, woraus sich eine entsprechend niedrige Produktivität ergibt. Zudem sind die Oberflächengüte und die Abbildegenauigkeit der Werkzeugoberfläche bei den Materialien, wie sie nach dem Stand der Technik eingesetzt werden, unbefriedigend. Aus diesem Grund müssen viele Gehäuse zusätzlich noch lackiert werden. Als weitere Nachteile sind die hohe Spannungsrissanfälligkeit, die zu einem leichten Zerbrechen des Gehäuses bei mechanischer Beanspruchung führen kann und die starke Vergilbungsneigung bei andauernder UV-Bestrahlung, die sich insbesondere bei hell eingefärbten Gehäusen bemerkbar macht, zu erwähnen.

Aufgabe der vorliegenden Erfindung ist es daher, eine Gehäuseschale für ein elektronisches Gerät, insbesondere ein elektronisches Gerät, welches einen Bildschirm enthält, wie zum Beispiel ein Fernsehgerät, ein Videomonitor oder ein Computermonitor, bereitzustellen, welche aus einem halogenfrei flammfesten, thermoplastischen Kunststoff durch einen Spritzgussprozess hergestellt werden kann. Dabei ist der halogenfrei flammfeste, thermoplastische Kunststoff so auszuwählen, dass bei der Produktion eine Verkürzung der Zykluszeit bei gleichzeitiger Verbesserung der Oberflächengüte und Abbildungsgenauigkeit der Werkzeugoberfläche erreicht wird. Weiterhin sollen die Spannungsrissanfälligkeit verringert und die Vergilbungsstabilität des Kunststoffs erhöht werden.

Die erfindungsgemäße Lösung besteht darin, die Gehäuseschale aus einem thermoplastischen Kunststoff auf Polyamidbasis zu fertigen, wobei der Kunststoff eine Mischung aus mindestens zwei Polyamiden mit unterschiedlicher Lösungsviskosität enthält. Gegenüber den nach dem Stand der Technik eingesetzten PPE/HIPS- bzw. PC/ABS-Blends, weisen thermoplastische Kunststoffe auf Polyamidbasis eine verbesserte Oberflächenqualität bei gleichzeitig verkürzter Zykluszeit im Spritzgusswerkzeug auf.

Thermoplastische Kunststoffe auf Polyamidbasis im Sinne der vorliegenden Erfindung sind Kunststoffe, die zumindest ein Polyamid enthalten. Dies können sowohl aliphatische als auch teilaromatische Polyamide sein, die entweder einen teilkristallinen oder einen amorphen Aufbau aufweisen können. Vorzugsweise wird die erfindungsgemäß ausgebildete Gehäuseschale für ein elektronisches Gerät aus aliphatischen Polyamiden gefertigt. Besonders geeignet sind dabei Polyamid 6, Polyamid 66, Copolyamide 6/66 oder Mischungen davon. Als Mischungen können dabei auch Mischungen aus Polyamiden mit gleichen Monomereinheiten verwendet werden, die eine unterschiedliche Lösungsviskosität aufweisen. Bevorzugt werden zur Herstellung der Gehäuseschalen leicht fließende Polyamide verwendet, die eine Lösungsviskosität von weniger als 140 ml/g besitzen, gemessen gemäß ISO 307 in einer 0,005 g/ml Probe enthaltender Schwefelsäurelösung.

Um den Brandschutzanforderungen zu genügen, sollen die zur Herstellung von Gehäuseschalen für elektronische Geräte verwendeten thermoplastischen Kunststoffe flammfest sein. Es hat sich gezeigt, dass Polyamide bereits ohne die Zugabe von Flammschutzmitteln flammfest sind. Eine Verbesserung des Flammschutzes kann durch Zugabe von Flammschutzmitteln erreicht werden. Aus DE-A-28 27 867 sind bereits halogenfrei flammfeste Thermoplaste bekannt. Hierin werden Phosphor enthaltende Kohlenstoffverbindungen in Kombination mit einer Stickstoffbase, nämlich Melamin und/oder Dicyandiamid und/oder Guanidin als Flammhemmer verwendet. Weiterhin ist aus DE-A 196 07 635 bekannt, dass Calcium- und Aluminiumsalze von Phosphin- oder Diphosphinsäuren als flammhemmende Zusätze in Polyamid-Kunststoffe verwendet werden können.

Es hat sich gezeigt, dass auch durch den Einsatz von Melamincyanurat ohne die gleichzeitige Verwendung von Phosphinsäuresalzen ein deutlich verbesserter Flammschutz erreicht wird. Der Vorteil bei der Verwendung von Melamincyanurat als flammhemmendem Zusatz liegt somit darin, dass auch auf phosphorhaltige Verbindungen verzichtet werden kann.

Insbesondere bei Gehäuseschalen für Fernsehgeräte, Videomonitore oder Computermonitore, handelt es sich um großflächige Bauteile. Zum Erreichen von kurzen Zykluszeiten und sauberen Oberflächen ist es erforderlich, dass die Kunststoffschmelze sich schnell in der Form verteilt. Dies wird durch eine niedrige Viskosität der Kunststoffschmelze erreicht. Weiterhin sind bei hochviskosen Kunststoffschmelzen zur Befüllung der Formhöhlung deutlich höhere Einspritzdrücke erforderlich als bei Kunststoffen mit niedrigerer Schmelzeviskosität. Bei hochviskosen Schmelzen und zu niedrigem Einspritzdruck kann es passieren, dass die Kunststoffschmelze in der Form bereits aushärtet, bevor die Ränder des Werkstückes von der Schmelze erreicht wurden. Hierdurch treten Fehlbildungen in den produzierten Bauteilen auf.

Im Folgenden wird die Erfindung anhand von Beispielen näher beschrieben.

Zur Untersuchung der Eigenschaften der thermoplastischen Kunststoffe werden jeweils Probeblättchen mit einem Testwerkzeug spritzgegossen. Anhand dieser Probeblättchen wird jeweils die Flammwidrigkeitsklasse gemäß UL Standard 94, die Spannungsrissbeständigkeit in Kontakt mit Ethanol, die UV-Vergilbung, die Oberflächengüte und die Zykluszeit beim Spritzguss geprüft. Untersucht werden die Eigenschaften von PPE/HIPS und ABS/PC, wie sie derzeit zur Herstellung von Gehäuseschalen für elektronische Geräte verwendet werden. Diesen Ergebnissen werden die Ergebnisse für thermoplastische Kunststoffe auf Polyamidbasis, wie sie erfindungsgemäß für die Herstellung von Gehäuseschalen eingesetzt werden, gegenübergestellt.

### Vergleichsbeispiel V1

Geprüft werden die Eigenschaften von PPE/HIPS, welches zum Beispiel unter dem Namen Noryl V 180 HF erhältlich ist. Die Untersuchung der Flammwidrigkeit wird nach dem UL-Standard 94 der Underwriter Laboratories Inc. durchgeführt. Hierzu wird eine vertikal aufgehängte Probenplatte mit einer Flamme beaufschlagt und anschließend die Flammausbreitungsgeschwindigkeit und das Abtropfverhalten des Kunststoffes untersucht. Die Einteilung erfolgt in Flammwidrigkeitsklassen V-0, V-1 und V-2 in Abhängigkeit von der Probendicke. Dabei ist V-0 die beste Klasse.

Die Prüfung der UV-Vergilbung erfolgt nach der ISO 4892. Hierzu wird die Probe 1000 Stunden lang einem Lichtstrahl mit einer Wellenlänge von 340 nm bei einer Leistung von 0,55 W/m² ausgesetzt. Anschließend erfolgt die Farbmessung mit einem Optronic Colour Flash 45.

Zur Untersuchung der Spannungsrissbeständigkeit wird eine Probe 7 Tage bei Raumtemperatur in Ethanol gelagert. Nach dieser Zeit wird die Probe getrocknet und der Abfall der Bruchspannung nach ISO 527-2 gemessen. Dabei wird der Wert in Prozenten der ursprünglichen Bruchspannung angegeben.

Zur Ermittlung der Zykluszeit beim Spritzgießprozess wird in einem Testwerkzeug Probestücke spritzgegossen. Zur Ermittlung der Zykluszeit wird die Zeit solange verkürzt, bis die Qualität der Probestücke abnimmt.

Die Beurteilung der Oberflächenqualität erfolgt durch eine visuelle Beurteilung der Oberflächengüte eines Probeplättchens. Dabei werden die Probeplättchen in Klassen von 1 bis 5 eingeteilt, wobei 1 sehr gut und 5 sehr schlecht bedeutet.

Die Ergebnisse der einzelnen Untersuchungen finden sich in Tabelle 1.

### Vergleichsbeispiel V2

Untersucht werden die Eigenschaften eines kommerziellen ABS/PC-Copolymers der Marke Bayblend FR 2000, wie es zur Herstellung von Gehäuseschalen für elektronisches Geräte verwendet wird. Die Untersuchung der Eigenschaften erfolgt wie im Vergleichsbeispiel V1 beschrieben. Die Ergebnisse befinden sich ebenfalls in Tabelle 1.

### Beispiel 1

Untersucht werden die Eigenschaften einer Polyamidmischung mit folgender Rezeptur:

| | |
|---|---|
| 59,00 % | Polyamid 6 mit einer Lösungsviskosität von ca. 150 ml/g |
| 33,00 % | Polyamid 66 mit einer Lösungsviskosität von ca. 125 ml/g |
| 8,00 % | Melamincyanurat |

Die genannten Zutaten werden in einem Zweischneckenextruder zu einer Polyamidmischung extrudiert und anschließend in einer Spritzgussmaschine weiterverarbeitet. Die Untersuchung der Eigenschaften erfolgt entsprechend Vergleichsbeispiel V1. Die Ergebnisse befinden sich ebenfalls in Tabelle 1.

### Beispiel 2

In der Rezeptur aus Beispiel 1 wird das Polyamid 66 mit einer Lösungsviskosität von ca. 125 ml/g durch ein Polyamid 6 mit einer Lösungsviskosität von ca. 125 ml/g ersetzt. Die Polyamidmischung wird ebenfalls auf einem Zweischneckenextruder erzeugt und anschließend in einer Spritzgussmaschine weiterverarbeitet. Auch hier werden die Eigenschaften entsprechend Vergleichsbeispiel V1 untersucht und die Ergebnisse in Tabelle 1 dargestellt.

### Vergleichsbeispiel V3

Untersucht wird ein Polyamid, das nach folgender Rezeptur auf einem Zweischneckenextruder hergestellt wird:

| | |
|---|---|
| 100 % | Polyamid 6 mit einer Lösungsviskosität von ca. 150 ml/g |

Das so erzeugte Polyamid wird in einer Spritzgussmaschine weiterverarbeitet und den gleichen Untersuchungen unterzogen wie die anderen Kunststoffe. Die Ergebnisse befinden sich auch hier in Tabelle 1.

### Vergleichsbeispiel V4

Auf dem Zweischneckenextruder wird ein Polyamid mit folgender Rezeptur erzeugt:

| | |
|---|---|
| 100 % | Polyamid 66 mit einer Lösungsviskosität von ca. 150 ml/g |

Auch dieses Polyamid wird in einer Spritzgussmaschine weiterverarbeitet und den gleichen Untersuchungen unterzogen wie die restlichen Kunststoffe. Die Ergebnisse der Untersuchung befinden sich auch hier in Tabelle 1.

**Tabelle 1**

| | Flammwidrigkeits-Klasse bei 1,6 mm | UV-Vergilbung | Spannungsrissbeständigkeit | Zykluszeit | Oberflächengüte |
|---|---|---|---|---|---|
| Vergleichsbeispiel V1 | V-1 | 25 | 21 % | 77 s | 4 |
| Vergleichsbeispiel V2 | V-2 | 23 | 18 % | 80 s | 4 |
| Beispiel 1 | V-0 | 12 | 45 % | 67 s | 2 |
| Beispiel 2 | V-0 | 10 | 43 % | 65 s | 2 |
| **Vergleichsbeispiel V3** | V-2 | 12 | 47 % | 70 s | 3 |
| **Vergleichsbeispiel V4** | V-2 | 15 | 53 % | 72 s | 3 |

## Patentansprüche

1. Gehäuseschale für ein elektronisches Gerät, eine Elektronenstrahlröhre oder einen Flachbildschirm enthaltend, wobei die Gehäuseschale aus einem hitzebeständigen, flammfesten thermoplastischen Kunststoff durch ein Spritzgussverfahren hergestellt wird und der Kunststoff auf Polyamidbasis aufgebaut ist, **dadurch gekennzeichnet, dass** der Kunststoff eine Mischung aus mindestens zwei Polyamiden mit unterschiedlicher Lösungsviskosität enthält.

2. Gehäuseschale nach Anspruch 1, **dadurch gekennzeichnet, dass** der Kunststoff Polyamid 6 enthält.

3. Gehäuseschale nach Anspruch 1, **dadurch gekennzeichnet, dass** der Kunststoff Polyamid 66 enthält.

4. Gehäuseschale nach einem der Ansprüche 1 bis 3, **dadurch gekennzeichnet, dass** der Kunststoff auf Polyamidbasis ein nicht halogeniertes Flammschutzmittel enthält.

5. Gehäuseschale nach Anspruch 4, **dadurch, gekennzeichnet, dass** das Flammschutzmittel Melamincyanurat ist.

6. Gehäuseschale nach einem der Ansprüche 1 bis 5, **dadurch gekennzeichnet, dass** das elektronische Gerät ein Fernsehgerät oder ein Monitor ist.

7. Verwendung eines hitzebeständigen, flammfesten, thermoplastischen Kunststoffs auf Polyamidbasis enthaltend eine Mischung aus mindestens zwei Polyamiden mit unterschiedlicher Lösungsviskosität zur Herstellung von Gehäuseschalen für elektronische Geräte, eine Elektronenstrahlröhre oder einen Flachbildschirm enthaltend, durch Spritzguss.

## Claims

1. A casing for an electronic device comprising a cathode-ray tube or comprising a flat screen, the casing being produced from a heat-resistant, flame-retardant thermoplastic by an injection-molding process and the plastic having a polyamide-based structure, wherein the plastic comprises a mixture of at least two polyamides with different solution viscosity.

2. The casing according to claim 1, wherein the plastic comprises nylon-6.

3. The casing according to claim 1, wherein the plastic comprises nylon-6,6.

4. The casing according to any of claims 1 to 3, wherein the polyamide-based plastic comprises a non-halogenated flame retardant.

5. The casing according to claim 4, wherein the flame retardant is melamine cyanurate.

6. The casing according to any of claims 1 to 5, wherein the electronic device is a television device or a monitor.

7. The use of a heat-resistant, flame-retardant polyamide-based thermoplastic comprising a mixture of at least two polyamides with different solution viscosity for producing casings for electronic devices comprising a cathode-ray tube or a flat screen by injection molding.

## Revendications

1. Coque de boîtier pour un appareil électronique, contenant un tube cathodique ou un écran plat, la coque de boîtier étant fabriquée à partir d'un plastique thermoplastique ignifuge résistant à la chaleur par un procédé de moulage par injection et le plastique étant formé à base de polyamide, **caractérisée en ce que** le plastique contient un mélange d'au moins deux polyamides de viscosité en solution différente.

2. Coque de boîtier selon la revendication 1, **caractérisée en ce que** le plastique contient du polyamide 6.

3. Coque de boîtier selon la revendication 1, **caractérisée en ce que** le plastique contient du polyamide 66.

4. Coque de boîtier selon l'une quelconque des revendications 1 à 3, **caractérisée en ce que** le plastique à base de polyamide contient un agent ignifuge non halogéné.

5. Coque de boîtier selon la revendication 4, **caractérisée en ce que** l'agent ignifuge est le cyanurate de mélamine.

6. Coque de boîtier selon l'une quelconque des revendications 1 à 5, **caractérisée en ce que** l'appareil électronique est une télévision ou un écran.

7. Utilisation d'un plastique thermoplastique ignifuge résistant à la chaleur à base de polyamide contenant un mélange d'au moins deux polyamides de viscosité en solution différente pour la fabrication de coques de boîtiers pour appareils électroniques, contenant un tube cathodique ou un écran plat, par moulage par injection.
